# EUROPÄISCHE PATENTSCHRIFT

(11) **EP 1 705 734 B1**
(45) Veröffentlichungstag und Bekanntmachung des Hinweises auf die Patenterteilung: **08.09.2010**
(21) Anmeldenummer: 06004310.6
(22) Anmeldetag: 03.03.2006
(51) Int. Cl.: H01M 2/10

(54) **Vorrichtung zur Notstromversorgung**
Battery backup device
Dispositif d' alimentation de secours

(30) Priorität: 23.03.2005 DE 102005013351
(43) Veröffentlichungstag der Anmeldung: 27.09.2006
(73) Patentinhaber: Diehl Aerospace GmbH, 88662 Überlingen (DE)
(72) Erfinder: Schlosser, Rüdiger, 91126 Schwabach (DE)
(74) Vertreter: Diehl Patentabteilung

(56) Entgegenhaltungen:
- DE-A1- 3 904 717
- DE-A1- 10 313 187
- DE-U1- 9 219 056
- DE-U1- 20 116 741
- US-A- 5 573 870

## Beschreibung

Die Erfindung bezieht sich auf eine Vorrichtung zur Stromversorgung, insbesondere zur Notstromversorgung für ein oder in einem Flugzeug, mit auswechselbaren Akkumulatoren oder Batterien nach dem Oberbegriff des Patentanspruchs 1.

Aus der DE 103 13 187 A1 ist ein Akkumulatormodul bekannt, der in ein Gehäuseteil einer Handwerkzeugmaschine längs einer Einschubrichtung verschiebbar ist. An gegenüberliegenden Seiten des Modulgehäuses sind zwei gegeneinander sowie quer zur Einschubrichtung orientierte, mit zumindest einer Blattfeder nach außen vorgespannte Arretierhaken angeordnet, die zwischen zwei Fingern einer Hand von einer Ruheposition in eine Endarretierungsposition zusammendrückbar sind.

In der DE 39 04 717 A1 ist ein Gestell für in Gussgefäßen eingeschlossene Akkumulatorelemente beschrieben. Um das Herausfallen der einmal eingesetzten Gefäße im Falle des Umdrehens des Gestells zu verhindern, besitzt das Gefäß gegenüberliegende halbseitig frei nachgiebige und leicht geneigte Wände, wodurch sich die Öffnung des Gestells in Richtung seines Bodens hin verengt und das untere Ende der nachgiebigen Wände nach Art einer Sperrklinke mit an den Gefäßen angeordneten Längswülsten oder -nuten zusammenwirkt.

Die DE 201 16 741 U1 beschreibt ein Akkumulatorpaket mit einem Gehäuse, das eine Kupplung zur Ankopplung an ein Elektrowerkzeug aufweist, mit einem Schwenkhebel, der wiederum eine Rastnase aufweist, die mit einem entsprechend geformten Rastelement am Kupplungselement des Elektrowerkzeuges zusammenwirkt.

Aus Sicherheitsgründen sind in einem Flugzeug, insbesondere auch in den Passagierflugzeugen der Firma Airbus, eine Notstromversorgung (Emergency Power Supply Unit, EPSU) und üblicherweise auch eine so genannte Autonomos Standby Power Supply Unit (ASPUS) vorgesehen, die eine zuverlässige und insbesondere ununterbrochene Stromversorgung für verschiedene Gerätefunktionen sicherstellen sollen. Solche Geräte zur Notstromversorgung werden in der Regel mit auswechselbaren und/oder wieder aufladbaren Batterien oder Akkumulatoren bestückt.

Während des bestimmungsgemäßen Einsatzes derartiger Notstromgeräte mit entsprechenden Batterieanordnungen treten infolge hoher Beschleunigungen während des Flugbetriebs entsprechend hohe Massenträgheitsmomente auf, die im Wesentlichen durch das Eigengewicht der Batterieanordnung bei Beschleunigungen bis beispielsweise 6g hervorgerufen werden. Aus diesem Grund besteht die Anforderung, geeignete Befestigungsmittel für derartige Batterieanordnungen bzw. Notstromgeräte bereitzustellen, die diese Trägheitsmomente oder Beschleunigungen unter Einhaltung der geforderten Sicherheitskriterien aufnehmen bzw. abfangen können. Da zudem die Lebensdauer derartiger wieder aufladbarer Batterien oder Batterieanordnungen auf beispielsweise 5 Jahre begrenzt ist, muss eine zuverlässige und fehlersichere Auswechselbarkeit derartiger Batterieanordnungen oder Batterieblöcke durch ein Wartungspersonal sichergestellt sein.

Zu diesem Zweck eines ausreichenden Festsitzes, insbesondere des Batterieblocks, einerseits und einer fehlersicheren Auswechselbarkeit des Batterie- oder Akkumulatorblocks andererseits kann eine lösbare Schraubenverbindung Verwendung finden, die dann jedoch den hohen Sicherheitsanforderungen der Luftfahrt gerecht werden muss. Denkbar ist hier beispielsweise der Einsatz von vorzugsweise vier metrischen Gewindeschrauben mit Unterleg- oder Beilegscheiben als unverlierbare, lösbare Befestigungselemente an einem die Batterien bzw. Akkumulatoren aufnehmenden Gehäuse. Entsprechende Schraubenmuttern in Form von Einpressteilen sind dann in einem Gerätechassis als Teil der Notstromversorgung verliersicher eingepresst.

Derartige Befestigungsmittel erfüllen zwar sowohl die Forderung einer Lösbarkeit zum Auswechseln der Batterien bzw. Akkumulatoren als auch zumindest eine relativ große Befestigungssicherheit, die auch hohe Massenträgheitsmomente infolge hoher Beschleunigungswerte relativ zuverlässig aufnehmen kann. Allerdings ist die Montage oder Demontage derartig befestigter Batterieanordnungen aufwändig, zumal die Befestigungsschrauben einzeln gelöst bzw. verschraubt werden müssen und hierzu zusätzliche Werkzeuge bereitzustellen sind.

Der Erfindung liegt die Aufgabe zugrunde, eine montagesichere und insbesondere auch montagefreundliche Vorrichtung zur Stromversorgung der eingangs genannten Art anzugeben.

Diese Aufgabe wird erfingdungsgemäß gelöst durch die Merkmale des Anspruchs 1. Dazu ist die Batterie- bzw. Akkumulatoranordnung in einem vorzugsweise mehrteiligen Gehäuse vorgesehen, das gehäuseaußenseitig mit Rastelementen versehen ist, die mit in einem Gerätechassis vorgesehenen Rastgegenelementen nach Art einer Schnapp- oder Rastverbindung zusammenwirken. Die lösbare Verriegelung der Schnapp- bzw. Rastverbindung kann nach Art eines Rastgesperres oder in Form eines zusätzlichen Verriegelungsschiebers realisiert sein.

Die Erfindung geht dabei von der Überlegung aus, dass eine einerseits zuverlässige und andererseits einfach handhabbare Befestigung einer Batterieanordnung in einer Notstromversorgung eines Flugzeugs dadurch hergestellt werden kann, dass vorzugsweise in zwei Hauptbelastungsrichtungen eine formschlüssige Verbindung eines die Batterien bzw. Akkumulatoren aufnehmenden Batteriegehäuses und einem Gerätechassis hergestellt wird. Die durch die formschlüssige Verbindung gesicherten Hauptbelastungsrichtungen liegen dabei bevorzugt entlang der X- und Y-Achse eines räumlichen, kartesischen Koordinatensystems. Auf diese Weise ist das Batteriengehäuse bereits in zwei von drei Hauptbelastungsrichtungen montage- und verliersicher festgelegt.

Die verliersichere Festlegung oder Befestigung des Batteriegehäuses in der verbleibenden dritten Belastungsrichtung, die unter den oben genannten Voraussetzungen in Richtung der Z-Achse verläuft, kann dann in einfacher und zuverlässiger Art und Weise durch eine Schnappverbindung oder ein Rastgesperre hergestellt werden. Ein zuverlässiges Rastgesperre wiederum kann in einfacher und zuverlässiger Art und Weise dadurch hergestellt werden, dass eine lösbare, vorzugsweise federbelastete Rast- oder Schnappverbindung im Montageendzustand zusätzlich verriegelt ist. Um eine solche Verriegelung zuverlässig aufzuheben und somit eine einfache Entriegelung der Rast- bzw. Schnappelemente zu gewährleisten, eignet sich besonders ein Verriegelungsschieber. Dieser ist ent lang der Rastelemente derart verschiebbar geführt, dass diese in Verriegelungsstellung arretiert oder blockiert und in Entriegelungsstellung zu deren Entrastung frei beweglich sind.

Das dem jeweiligen als Schnapphaken ausgeführten Rastelement zugeordnete Verriegelungselement, das im Montagezustand des Batteriegehäuses im Gerätechassis das jeweilige Rastelement blockiert, verhindert ein unbeabsichtigtes Auslenken des jeweiligen Schnapphakens im Fall betriebsbedingt auftretender Kräfteeinwirkungen. So können erkanntermaßen die Auslenkdrehmomente der federwirksamen Fixierstege oder Torsionselemente allein möglicherweise unzureichend sein, um die in allen denkbaren Betriebszuständen eines Flugzeugs sicherzustellende Befestigung des Batteriegehäuses zu gewährleisten. Durch die zusätzliche Verriegelung der Schnapp- bzw. Rastverbindung zwischen dem Batteriegehäuse und dem Gerätechassis sind jedoch auch die im Bereich der Luftfahrt geforderten hohen Qualitäts- und Sicherheitsansprüche in einfacher Weise zuverlässig erfüllt.

In zweckmäßiger Ausgestaltung ist das Batteriegehäuse an gegenüberliegenden Gehäuseseiten mit Schnapphaken versehen, die ihrerseits an schwenkbeweglichen und dabei vorzugsweise federnden oder federbelasteten sowie nach Art von Hebelarmen wirksamen Schnapphaken endseitig gehalten sind. Die Schnapphaken greifen für eine einerseits zuverlässige und andererseits montagefreundlich lösbare Verbindung des Batteriegehäuses in Rastösen ein, die in einem Einbau- oder Rahmenboden des Gerätechassis vorgesehen und nach Art von Hinterschneidungen wirksam sind. Diese Hinterschneidungen sind zweckmäßigerweise in abgewinkelte Rastlaschen gebildet. Diese wiederum sind durch aus dem Chassis- bzw. Rahmenboden ausgeformten, d.h. ausgeschnittenen oder ausgestanzten und in Richtung auf das Batteriegehäuse abgewinkelten Laschen gebildet. Bei einem zumindest im Bereich des Aufnahmerahmens für das Batteriegehäuse bevorzugt aus Metallblech bestehenden Geräteschassis sind dann diese (zweiten) Rastelemente oder -ösen als Blechlaschen ausgeführt.

Die die Rast- oder Schnapphaken tragenden Rast- oder Hebelarme sind über quer zu diesen verlaufende Verbindungs- oder Fixierstege an das Batteriegehäu se, vorzugsweise an dessen Gehäuseoberteil, angeformt. Diese Anformung und Ausgestaltung der Fixierstege ist dabei derart ausgeführt, dass diese nach Art von Torsionsfedern wirksam sind, wodurch die gewünschte Federwirkung der Schnapphaken bzw. der Hebelarme realisiert ist. Die Schnapphaken sind dabei an die am Batteriegehäuse schwenkbeweglich gehaltenen Hebelarmen beabstandet zur Schwenkachse des Hebelarms angeformt. Das dem jeweiligen Schnapphaken gegenüberliegende Freiende des Hebelarms dient dann als Betätigungsende zum Entklinken der Schnapphaken aus der jeweiligen Schnappverbindung oder Verrastung. Durch Anordnung von zwei die Schnapphaken tragenden baugleichen Hebelarme an gegenüberliegenden Seiten des Batteriegehäuses ist in einfacher Art und Weise eine Einhandmontage bzw. -demontage des Batteriegehäuses ermöglicht.

Die die jeweiligen Schnapphaken tragenden Hebelarme sind an das Batteriegehäuse über Fixierstege angeformt, die nach Art von Torsionsfedern wirksam sind. Die Rückstellkraft dieser federelastisch wirksamen Fixierstege ist dabei in Richtung der Verrastung der Schnapphaken mit den Rastösen des Gerätechassis wirksam.

Für eine fehlerfreie Montage des Batteriegehäuses im oder am Gerätechassis ist am Gehäuseboden des Batteriegehäuses dezentral oder asymmetrisch eine Kontaktierung für die Batterien bzw. Akkumulatoren vorgesehen. Durch diese dezentrale bzw. asymmetrische Anordnung der Kontaktierung im Bereich des Gehäusebodens ist die Montage- oder Fügerichtung für das Batteriegehäuse festgelegt, so dass eine fehlerhafte Montage praktisch ausgeschlossen ist. Die Demontagerichtung verläuft dann entgegengesetzt zur Montage- bzw. Fügerichtung.

Das zweckmäßigerweise zweiteilige Batteriegehäuse umfasst ein Gehäuseoberteil und ein Gehäuseunterteil. Die Schnapp- oder Rasthaken sind am Batteriegehäuse seitlich angeformt und somit integraler Bestandteil des Batteriegehäuses. Die die ersten Rastelemente bildenden Schnapphaken sind dabei zweckmäßigerweise einstückiger Bestandteil des Gehäuseoberteils des aus diesem und dem Gehäuseunterteil aufgebauten Batteriegehäuses. Die beiden Gehäuseteile des Batteriegehäuses sind lösbar miteinander verbunden, so dass die Batterien bzw. Akkumulatoren in einfacher Weise austauschbar sind.

Das Batteriegehäuse besteht daher zweckmäßigerweise aus Kunststoff, vorzugsweise aus einem glasfaserverstärkten Kunststoff. Die Ruhestellung oder Ruheposition der federbelasteten Rastarme ist dabei die Rastposition. Die Abmessungen der Federstege sind dabei derart ausgelegt, dass einerseits eine zuverlässige Schnapp- oder Rastverbindung gewährleistet ist, und dass andererseits die zur Handhabung aufzuwendenden Füge- und zur Sicherstellung nicht zu hoch sind, um eine ausreichende Montagefreundlichkeit zu erreichen.

Die zweckmäßigerweise in Form von Verriegelungsschiebern ausgeführten Verriegelungselemente sind bevorzugt in das Gehäuseoberteil des Batteriegehäuses integriert. Die seitlich am Batteriegehäuse schiebebeweglich gehaltenen Verriegelungselemente sind dabei in entsprechenden Gehäuseausnehmungen oder - nuten geführten. Die Verrieglungsschieber sind somit in einfacher und besonders montagefreundlicher Weise zwischen der das jeweilige Rastelement blockierenden Verriegelungsstellung und der das entsprechende Rastelement zur Demontage des Batteriegehäuses freigebenden Entriegelungsstellung quer zur Verrastrichtung oder Rastauslenkung des jeweiligen Rastelementes verschiebbar.

In vorteilhafter Weiterbildung sind die Verriegelungselemente oder -schieber rahmenartig ausgebildet. In Montagestellung liegt dabei eine untere Rahmenseite an der der Verrastungsstelle abgewandten Seite des jeweiligen Rastelementes an diesem an. Dadurch ist in Verriegelungsstellung das jeweilige Rastelement bzw. der jeweilige Schnapphaken gegen eine unbeabsichtigte Auslenkung mit der Folge einer ungewünschten Entklinkung der Schnappverbindung blockiert. Eine dem jeweiligen Schnapphaken abgewandte obere Rahmenseite des Verriegelungselementes hintergreift in Montageendstellung des Batteriegehäuses den jeweiligen Hebelarm des Rastelementes an dem diesem abgewandten Schwenk- oder Betätigungsende, so dass zusätzlich zum jeweiligen Schnapphaken auch das Betätigungsende des Hebelarmes blockiert ist.

Die mit der Erfindung erzielten Vorteile bestehen insbesondere darin, dass durch die Ausbildung einer zweckmäßigerweise verriegel- oder blockierbaren Schnapp-oder Rastverbindung zwischen einem Batteriegehäuse und einem dieses aufnehmenden Gerätechassis einer eine auch die Sicherheitsanforderungen in der Luftfahrt erfüllende montagesichere Befestigung einer Vorrichtung zur Notstromversorgung geschaffen ist. Zudem ist hierdurch eine einfache Montage und Demontage zur zuverlässigen Wartung der Notstromversorgung sichergestellt. Die mit dieser Befestigungseinrichtung ausgeführte Notstromversorgung für Flugzeuge ist praktisch ohne Werkzeug sowie insbesondere auch in Einhandbedienung montierbar und demontierbar. Dies führt insbesondere zu einer erheblichen Zeitersparnis bei der Wartung der Notstromversorgung, wobei ein Batterie- bzw. Akkumulatorwechsel mit besonders geringem Wartungs- und Zeitaufwand ermöglicht ist. Dabei ist eine korrekte Montage infolge einer Rückmeldung sichergestellt, zumal die Verklinkung oder Verrastung der Schnapp- bzw. Rastverbindung zwischen dem Batteriegehäuse und dem Gerätechassis topologisch, optisch, akustisch und/oder haptisch erkennbar ist.

Nachfolgend wird ein Ausführungsbeispiel der Erfindung anhand einer Zeichnung näher erläutert. Darin zeigen:
- Fig. 1: in einer Explosionsdarstellung die erfindungsgemäße Vorrichtung mit einem Gerätechassis und einem Batteriegehäuse,
- Fig. 2: in perspektivischer Darstellung das Gerätechassis mit darauf montiertem Batteriegehäuse,
- Fig. 3: in perspektivischer Darstellung das Gerätechassis mit einem Aufnahmerahmen für das Batteriegehäuse,
- Fig.4: in perspektivischer Darstellung das auf einem ausschnittsweise dargestellten Rahmensboden des Gerätechassis montierte Batteriegehäuse,
- Fig. 5: in perspektivischer Seitenansicht das Batteriegehäuse mit angeformten Rastelement,
- Fig. 6: in einer Darstellung gemäß Fig. 5 das Batteriegehäuse mit zusätzlichem Verriegelungselement,
- Fig. 7: in einer Schnittdarstellung das mit dem Gerätschassis verrastete Batteriegehäuse bei geöffneter Verriegelung, und
- Fig. 8: in einer Darstellung gemäß Fig. 7 das mit dem Gerätechassis verrastete Batteriegehäuse bei geschlossener Verriegelung.

Einander entsprechende Teile sind in allen Figuren mit den gleichen Bezugszeichen versehen.

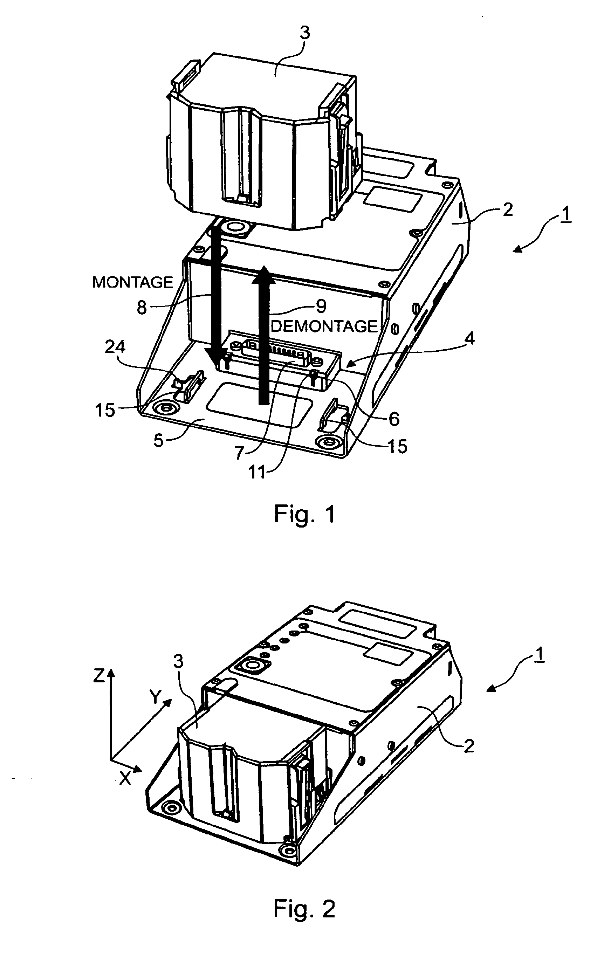

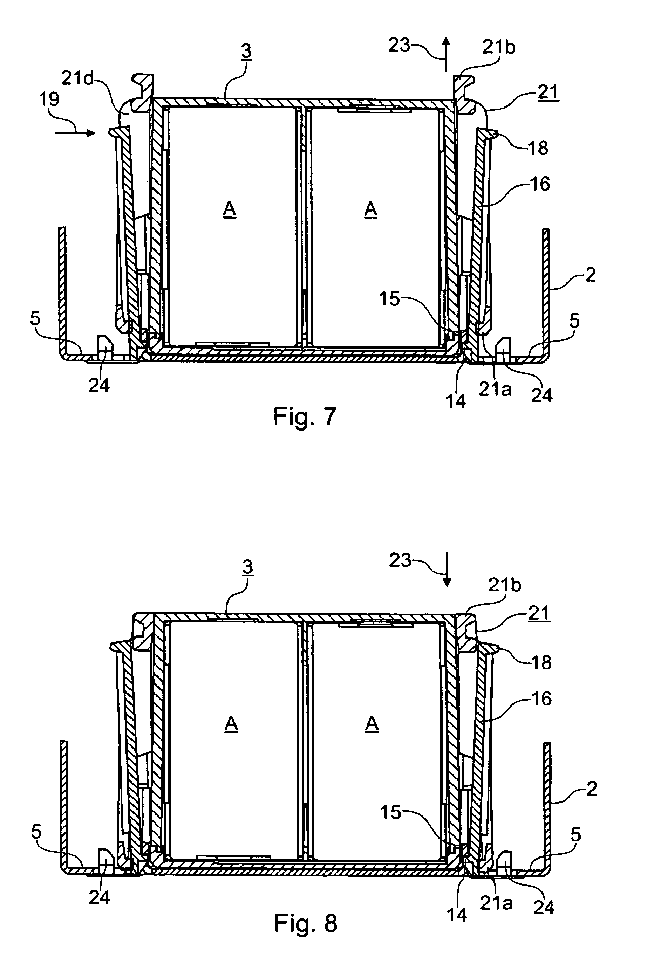

Die Fig. 1 bis 3 zeigen eine Vorrichtung 1 zur Notstromversorgung, wie diese in einem Flugzeug eingesetzt ist, mit einem Gerätschassis 2 und mit einem Batteriegehäuse 3. Das Batteriegehäuse 3 dient zur Aufnahme von (nicht dargestellten) Batterien, insbesondere wiederaufladbaren Batterien oder Akumolatoren A (Fig. 7,8). Während das Batteriegehäuse 3 vorzugsweise aus Kunststoff besteht, ist das Gerätechassis 2 zumindest im Bereich eines Aufnahmerahmens 4 für das Batteriegehäuse 3 aus einem Metallblech gefertigt.

Ein sich aus dem Rahmen- oder Chassisboden 5 des Gerätschassis 2 domartiger erhebender Kontaktierungssockel 6 enthält eine Kontaktierungsleiste 7, die mit einer (nicht sichtbaren) korrespondierenden Kontaktierungsleiste des Batteriegehäuses 3 im Montagezustand kontaktiert ist. Hierzu ist in nicht näher dargestellter Art und Weise im Bodenbereich des Batteriegehäuses 3 eine entsprechende Ausnehmung vorgesehen, in der die Kontaktierung für die in das Batteriegehäuse 3 eingelegten Batterien bzw. Akumolatoren vorgesehen ist. Die durch den Pfeil 8 angedeutete Montage- oder Fügerichtung des Batteriegehäuses 3 ist somit durch die Kontaktierung zwischen dem Batteriegehäuse 3 und dem Gerätechassis 2 festgelegt. Die durch den Pfeil 9 angedeutete Demontagerichtung ist der Montagerichtung 8 entgegengesetzt.

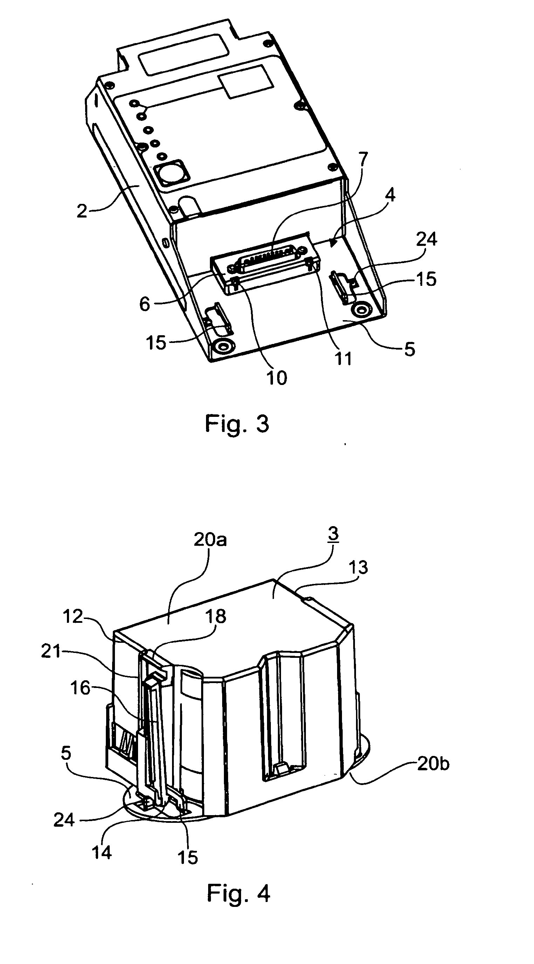

Wie insbesondere aus Fig. 3 ersichtlich ist, weist der domartig aus dem Chassisboden 5 herausragende Kontaktierungssockel 6 stirnseitig zwei T-förmige Aufnahmenuten 10 und 11 auf, in die am Batteriegehäuse 3 vorgesehene (nicht sichtbare) Stiftelemente eingreifen. Hierdurch wird vorteilhafterweise erreicht, dass zwei von drei Hauptbelastungsrichtungen, nämlich gemäß der Darstellung nach Fig. 2 die Hauptbelastungsrichtungen entlang der x-Achse und der y-Achse, durch eine formschlüssige Verbindung des Batteriegehäuses 3 mit dem Gerätechassis 2 bzw. dessen Aufnahmerahmen 4 festgelegt sind. Bereits durch diese Formschlussverbindung ist das Batteriegehäuse 3 am Gerätechassis 2 in der xy-Ebene gegen eine Verschiebung in Richtung der x-Achse und/oder der y-Achse gesichert.

Eine Befestigung zur Vermeidung einer Bewegung des Batteriegehäuses 3 in die dritte Hauptbelastungsrichtung, d.h. in Richtung der z-Achse sind seitlich an das Batteriegehäuse 3 an gegenüberliegenden Gehäuseseiten 12,13 erste Rastelemente 14 angebracht. Diese Rastelemente 14 sind in Form von Schnapphacken ausgebildet, die zur Herstellung einer Rast- oder Schnappverbindung mit am Gerätechassis 2 vorgesehenen zweiten Rastelementen 15 zusammen wirken.

Die zweiten Rastelemente 15 wirken nach Art von Rastösen, die durch aus dem Blechboden 5 des Gerätschassis 2 bzw. dessen Aufnahmerahmens 4 ausgeformte rechtwinklig ausgebogene Laschen gebildet sind. Diese, nachfolgend als Rastlaschen bezeichneten zweiten Rastelemente 15 erstrecken sich vorzugsweise senkrecht aus dem Chassisboden 5 heraus in z-Richtung zum Batteriegehäuse 3 hin. Die Rastlaschen 15 bilden dabei eine Hinterschneidung für die seitlich am Batteriegehäuse 3 vorgesehenen Schnapphacken 14 aus. Die Fig. 4, 7 und 8 zeigen den Montageendzustand mit der Schnappverbindung zwischen dem Batteriegehäuse 3 und dem Gerätschassis 2.

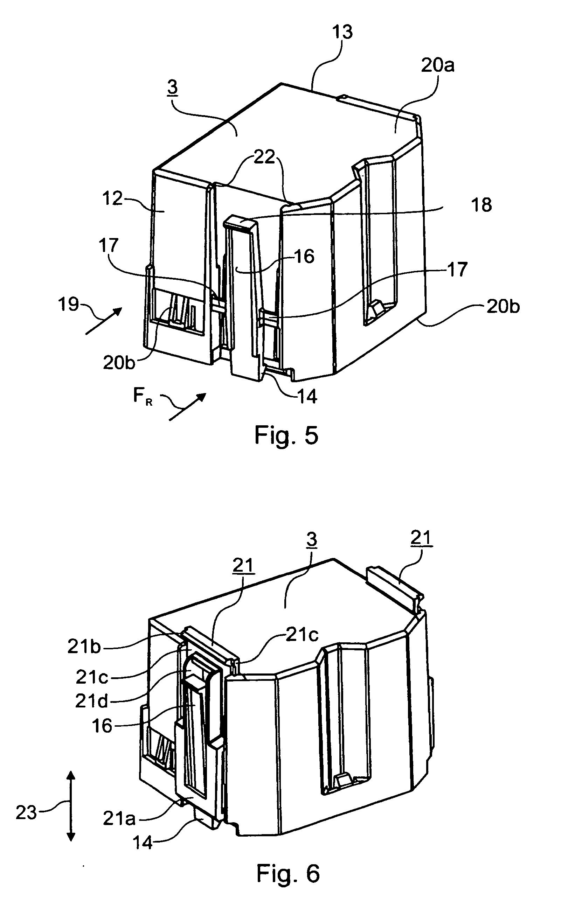

Wie aus Fig. 5 vergleichsweise deutlich ersichtlich ist, sind die Schnapphacken 14 an einem dem Boden des Batteriegehäuses 3 - und somit im Montagezustand dem Chassisboden 5 - zugewandten Freiende eines Hebelarms 16 angeformt. Der Hebelarm 16 selbst ist über Fixierstege 17 an die jeweilige Gehäuseseite 12,13 des Batteriegehäuses 3 angeformt. Die Fixierstege 17 erfüllen dabei mehrere Funktionen eine Doppelfunktion. So dienen diese Fixierstege 17 einerseits zur Festlegung bzw. Fixierung der ersten Rastelemente mit dem jeweiligen Hebelarm 16 und dem an diesen angeformten Schnapphacken 14 am Batteriegehäuse 3. Des weiteren sind die Fixierstege 17 nach Art von Torsionsfedern wirksam. Ferner bilden die Fixierstege 17 ein Schwenkgelenk für das jeweilige Rastelement 14, 16.

Die durch den jeweiligen Fixiersteg 17 erzeugte Rückstellkraft F_{R} wirkt dabei in Richtung der jeweiligen Gehäuse- oder Seitenwand 12,13 des Batteriegehäuses 3 und somit entlang der in Fig. 2 dargestellten x-Achse. Bei Betätigung des Hebelarms 16 an dessen dem Schnapphacken 14 gegenüber liegenden Frei- oder Betätigungsende 18 in Entriegelungsrichtung 19 (Fig. 5) wird der Hebelarm 16 um den gleichzeitig als Schwenkachse wirksamen Fixierstege 17 verschwenkt mit der Folge, dass die Rast- oder Schnappverbindung 14, 15 entklinkt oder gelöst wird. Dabei können mit einer Hand einer Bedienperson die beiden an den gegenüber liegenden Gehäuseseiten 12,13 angeordneten Hebelarme 16 gleichzeitig betätigt werden. Dadurch werden beide Schnapphacken 14 entklingt, so dass das Batteriegehäuse 3 manuell demontiert werden kann.

Das Batteriegehäuse 3 weist ein Gehäuseoberteil 20a und ein Gehäuseunterteil 20b auf. Die Gehäuseteile 20a, 20b bestehen aus einem glasfaserverstärkten Kunststoff. Die beiden an gegenüber liegenden Gehäuseseiten 12,13 vorgesehenen Rastelemente 14 an den jeweiligen Hebelarmen 16 sind zweckmäßigerweise in das Gehäuseoberteil 20a integriert. Bei Aufsetzen des Batteriegehäuses 3 in Montagerichtung 9 sowie im Anschluss an die selbstjustierende Fügung des Batteriegehäuses 3 mit dem Gerätechassis 2 verrasten oder verschnappen die jeweiligen Schnapphacken 14 mit den Rastlaschen 15 automatisch. Dabei drehen die federartig wirksamen Fixierstege 17 den jeweiligen Schnapphacken 14 nach dessen Montageauslenkung in die Ruhposition zurück. Die als entsprechende Federelemente wirksamen Fixierstege 17 bestimmen auf Grund deren Materialzusammensetzung und deren geometrischen Abmessungen die aufzuwendenden Füge- und Montagekräfte.

Diese sind einerseits an eine ausreichende Befestigungssicherheit des Batteriegehäuses 3 am Gerätechassis 2 und andererseits an eine montagefreundliche Handhabbarkeit zur Demontage des Batteriegehäuses 3 angepasst.

Da die Feder- oder Rückstellkräfte F_{R} der Fixierstege 17 auf Grund der gewünschten Montagefreundlichkeit nicht zu hoch ausgelegt sein sollten, ist es zweckmäßig, die Rastelemente oder Schnapphacken 14 zur Vermeidung einer unbeabsichtigten Auslenkung entgegen der dargestellten Kraftrichtung 19, F_{R} durch zusätzliche Verriegelungselemente 21 zu sichern. Dadurch werden gegebenenfalls unzureichende Auslenkdrehmomente der torsionsfederartig wirksamen Fixierstege 17 kompensiert, so dass die geforderten Qualitäts- und/oder Sicherheitsansprüchen der Luftfahrt eingehalten sind.

Die Fig. 6 bis 8 zeigen das Zusammenwirken der Verriegelungselemente 21 mit den Rastelementen oder Schnapphacken 14. Die Verriegelungselemente 21 selbst sind - wie aus Fig. 6 vergleichsweise deutlich ersichtlich ist - rahmenartig ausgebildet. Dabei liegt eine dem jeweiligen Schnapphacken 14 zugewandte untere Rahmenseite 21a des Verriegelungselementes 21 auf der dem Schnappelement 14 abgewandten Seite des jeweiligen Hebelarms 16 an diesem an. Die gegenüberliegende oberer Rahmenseite 21b des Verriegelungselementes 21 dient als Griffelement zur Betätigung des Verriegelungselementes 21. Die vergleichsweise langen seitlichen Rahmen- oder Führungsseiten 21c des Verriegelungselementes 21 sind in Führungssikken oder -nuten 22 (Fig. 5) geführt, die in das Batteriegehäuse 3 seitlich eingebracht sind. Innere Führungsschienen 21d des Verriegelungselementes 21 liegen beidseitig an dem Hebelarm 16 an, um die Führing des Verriegelungselementes 21 in dem Batteriegehäuse 3 weiter zu verbessern. Das Verriegelungselement 21 ist somit in Schieberichtung 23 parallel zum Hebelarm 16 des jeweiligen Rastelementes 14, 16 verschiebbar.

Das nachfolgend als Verriegelungsschieber bezeichnete Verriegelungselement 21 ist somit entlang der z-Achse und dabei in Schieberichtung 23 zwischen einer in Fig. 7 dargestellten Entriegelungsstellung und einer in Fig. 8 dargestellten Verriegelungsstellung verschiebbar. Wie aus Fig. 8 vergleichsweise deutlich ersichtlich ist, liegt die untere Rahmenseite 21a des Verriegelungsschiebers 21 vorzugsweise im Gerätechassis 2 bzw.- dessen Aufnahmerahmen 4 möglichst bodennah und damit unterhalb des Schnapphackens 14 am Hebelarm 16 des jeweiligen Schnapphakens 14 an. Durch ein aus dem Chassisboden 5 in Form einer rechtwinklig ausgebogenen Lasche ausgebildetes Führungs- und Arretierungselement 24 wird verhindert, dass der Schnapphaken 14 am Hebelarm 16 zusammen mit der unteren Rahmenseite 21a des Verriegelungsschiebers 21 aus der Rast- und Schnappverbindung mit der Rastlasche 15 entklinkt oder gelöst wird. Gleichzeitig hintergreift die gegenüber liegende obere Rahmenseite 21b des Verriegelungsschiebers 21 das Betätigungsende 18 des Hebelarms 16 derart, dass dieser gegen eine Bewegung oder Verschwenkung in Entklingungsrichtung 19 (Fig. 5) blockiert ist. Der Verriegelungsschieber 21 blockiert somit den jeweiligen Hebelarm 16 beidendseitig und verhindert somit zuverlässig eine Beweglichkeit des entsprechenden Rastelementes 14, 16 sowohl oben als auch unten.

Zur Demontage des Batteriegehäuses 3 werden auch in Einhandbedienung - zunächst die Verriegelungsschieber 21 in Schieberichtung 23 entlang der z-Achse nach oben verschoben. Dadurch ist die Verriegelung geöffnet, so dass der jeweilige Schnapphacken 14 bzw. das jeweilige Rastelement 14,16 freibeweglich ist. Durch anschließende Betätigung des Rastelementes 14,16 am Betätigungsende 18 des jeweiligen Hebelarms 16 wird die Schnapp- oder Rastverbindung geöffnet, so dass das Batteriegehäuse 3 demontiert werden kann.

Bei einer anschließenden, erneuten Montage des Batteriegehäuses 3 wird dieses auf oder in das Gerätechassis 2 eingesetzt, wobei zunächst die formschlüssige Verbindung und gleichzeitige Kontaktierung zwischen dem Batteriegehäuse 3 und dem Gerätechassis 2 hergestellt wird. Anschließend oder gleichzeitig erfolgt die automatische Verrastung des Batteriegehäuses 3 mit dem Gerätechassis 2 über die Schnappverbindung zwischen den Rastelementen 14,16 und den Rastlaschen 15 im Chassis- oder Rahmenboden 5 des Gerätchassis 2. Durch anschließendes Verschieben der Verriegelungsschieber 21 in Schieberrichtung 23 wird die Rast-oder Schnappverbindung blockiert, so dass diese zur Vermeidung einer unerwünschten Auslenkung der Schnapphacken 14 mit der Folge einer Entklinkung oder Öffnung der Schnappverbindung 14, 15 nach Art eines Rastgesperres gesperrt ist.

### Bezugszeichenliste

- 1: Vorrichtung
- 2: Gerätechassis
- 3: Batteriegehäuse
- 4: Aufnahmerahmen
- 5: Chassis-/Rahmenboden
- 6: Kontaktierungssockel
- 7: Kontaktierungsleiste ?
- 8: Montagerichtung
- 9: Demontagerichtung
- 10,11: Aufnahmenut
- 12,13: Gehäuse-/Seitenwand
- 14: (erstes) Rastelement/Schnapphacken
- 15: (zweites) Rastelement/Rastlasche
- 16: Hebelarm
- 17: Fixiersteg
- 18: Betätigungsende
- 19: Entriegelungsrichtung
- 20a: Gehäuseoberteil
- 20b: Gehäuseunterteil
- 21: Verriegelungselement/ -schieber
- 21 a: untere Rahmenseite
- 21b: obere Rahmenseite
- 21c: Rahmen-/ Führungsseite
- 22: Führungssikke/ -nut
- 23: Schieberichtung

- B: Batterie/Akkumulator

## Patentansprüche

1. Vorrichtung (1) zur Stromversorgung, insbesondere Notstromversorgung in einem Flugzeug, mit einem Gerätechassis (2) und mit darauf montierbarem Batteriegehäuse (3) zur Aufnahme einer Anzahl von Batterien oder Akkumulatoren (A), wobei seitlich am Batteriegehäuse (3) erste Rastelemente (14, 16) vorgesehen sind, die mit am Gerätechassis (2) vorgesehenen korrespondierenden zweiten Rastelementen (15) nach Art einer Schnappverbindung lösbar zusammenwirken,
**gekennzeichnet durch**
ein dem jeweiligen ersten Rastelement (14, 16) zugeordnetes Verriegelungselement (21), das zwischen einer das jeweilige Rastelement (14, 16) blockierenden Verriegelungsstellung und einer das entsprechende Rastelement (14, 16) zur Demontage des Batteriegehäuses (3) freigebenden Entriegelungsstellung beweglich geführt ist.

2. Vorrichtung nach Anspruch 1,
**dadurch gekennzeichnet,**
**dass** im Gerätechassis (2) zumindest eine Aufnahmenut (10, 11) zur Herstellung einer formschlüssigen Verbindung mit dem Batteriegehäuse (3) vorgesehen ist,
wobei die formschlüssige Verbindung vorzugsweise in zwei zueinander orthogonale Belastungsrichtungen (X, Y) wirksam ist,
und wobei die Aufnahmenut (10, 11) vorzugsweise im Bereich eines domartigen Kontaktierungssockels (6) des Gerätechassis (2) zu dessen Kontaktierung mit dem Batteriegehäuse (3) vorgesehen ist.

3. Vorrichtung nach Anspruch 1 oder 2,
**dadurch gekennzeichnet,**
**dass** die ersten Rastelemente (14) an einem im Montagezustand dem Gerätechassis (2) zugewandten Freiende eines am Batteriegehäuse (3) schwenkbeweglich gehaltenen Hebelarms (16) angeformt sind,
wobei der Hebelarm (16) vorzugsweise federelastisch am Batteriegehäuse (3) gehalten ist,
und wobei der Hebelarm (16) vorzugsweise über einen nach Art einer Torsionsfeder wirksamen Fixiersteg (17) am Batteriegehäuse (3) schwenkbeweglich gehalten.

4. Vorrichtung nach Anspruch 3,
**dadurch gekennzeichnet,**
**dass** der Hebelarm (16) über den Fixiersteg (17) an das Batteriegehäuse (3) angeformt, ist.

5. Vorrichtung nach einem der Ansprüche 1 bis 4,
**dadurch gekennzeichnet,**
**dass** die ersten Rastelemente (14) als Schnapphaken und die zweiten Rastelemente (15) in Form von Hinterschneidungen für die ersten Rastelemente (14) bildenden Rastösen ausgeführt sind,
wobei die zweiten Rastelemente (15) vorzugsweise als Laschen ausgeführt sind, die aus einem Rahmenboden (5) des Gerätechassis (2) ausgeformt und im Montagezustand des Batteriegehäuses (3) in dessen Richtung abgewinkelt sind.

6. Vorrichtung nach einem der Ansprüche 1 bis 5,
**dadurch gekennzeichnet,**
**dass** die ersten Rastelemente (14, 16) im Montagezustand des Batteriegehäuses (3) verriegelt sind.

7. Vorrichtung nach einem der Ansprüche 1 bis 6,
**dadurch gekennzeichnet,**
**dass** das Verriegelungselement (21) quer zur Verrastungsrichtung (F_{R}, 19) des jeweiligen ersten Rastelementes (14, 16) am Batteriegehäuse (3) schiebebeweglich gehalten ist.

8. Vorrichtung nach Anspruch 5 oder 7,
**dadurch gekennzeichnet,**
**dass** das Verriegelungselement (21) rahmenartig ausgebildet ist, wobei eine dem ersten Rastelement (14) zugewandte untere Rahmenseite (21a) in Verriegelungsstellung an der der Verrastung abgewandten Seite des ersten Rastelements (14) an diesem anliegt,
wobei vorzugsweise vorgesehen ist, dass das Verriegelungselement (21) mit einer dem ersten Rastelement (14) abgewandten oberen Rahmenseite (21 b) in Verriegelungsstellung den Hebelarm (16) des ersten Rastelements (14, 16) an dem diesem abgewandten Betätigungsende (18) blockierend hintergreift.

9. Vorrichtung nach einem der Ansprüche 1 bis 8,
**dadurch gekennzeichnet,**
**dass** das Batteriegehäuse (3) ein Gehäuseunterteil (20b) und ein Gehäuseoberteil (20a) aufweist, an dem an gegenüberliegenden Gehäuseseiten (12, 13) jeweils eines der ersten Rastelemente (14, 16) gehalten ist.

10. Vorrichtung nach einem der Ansprüche 1 bis 9,
**dadurch gekennzeichnet,**
**dass** das Batteriegehäuse (3) aus Kunststoff besteht, wobei die ersten Rasthaken (14, 16) mit dem Batteriegehäuses (3) einstückig verbunden sind.

11. Vorrichtung nach einem der Ansprüche 1 bis 10,
**dadurch gekennzeichnet,**
**dass** das Gerätechassis (2) zumindest im Bereich eines Aufnahmerahmens (4) für das Batteriegehäuse (3) aus einem Metallblech besteht.

## Claims

1. Power supply apparatus (1), in particular emergency power supply in an aircraft, having an appliance chassis (2) and having a battery housing (3) which can be fitted to it for holding a number of batteries or rechargeable batteries (A), with first latching elements (14, 16) being provided at the side on the battery housing (3) and interacting detachably with corresponding second latching elements (15), which are provided on the appliance chassis (2), in the form of a snap-action connection,
**characterized by**
a locking element (21) which is associated with the respective first latching element (14, 16) and is guided such that it can move between a locked position, which blocks the respective latching element (14, 16), and an unlocked position, which releases the corresponding latching element (14, 16) for removal from the battery housing (3).

2. Apparatus according to Claim 1,
**characterized**
**in that** at least one holding groove (10, 11) is provided in the appliance chassis (2), in order to produce an interlocking connection to the battery housing (3), the interlocking connection preferably being effective in two mutually orthogonal load directions (X, Y), and the holding groove (10, 11) preferably being provided in the area of a dome-like contact-making cap (6) on the appliance chassis (2), in order to make contact between it and the battery housing (3).

3. Apparatus according to Claim 1 or 2, **characterized**
**in that** the first latching elements (14) are integrally formed at a free end, facing the appliance chassis (2) in the installed state, of a lever arm (16) which is held on the battery housing (3) such that it can pivot, the lever arm (16) preferably being held resiliently on the battery housing (3), and the lever arm (16) preferably being held on the battery housing (3) such that it can pivot, via a fixing web (17) which acts in the form of a torsion spring.

4. Apparatus according to Claim 3,
**characterized**
**in that** the lever arm (16) is integrally formed on the battery housing (3), via the fixing web (17).

5. Apparatus according to one of Claims 1 to 4, **characterized**
**in that** the first latching elements (14) preferably being in the form of snap-action hooks, and the second latching elements (15) are in the form of undercuts for latching eyes which form the first latching elements (14), the second latching elements (15) preferably being in the form of lugs which are formed from a frame base (5) of the appliance chassis (2) and are angled in the direction of the battery housing (3), when the battery housing (3) has been fitted.

6. Apparatus according to one of Claims 1 to 5, **characterized**
**in that** the first latching elements (14, 16) are locked when the battery housing (3) has been fitted.

7. Apparatus according to one of Claims 1 to 6, **characterized**
**in that** the locking element (21) is held on the battery housing (3) such that it can slide transversely with respect to the latching direction (F_{R}, 19) of the respective first latching element (14, 16).

8. Apparatus according to Claim 5 or 7, **characterized**
**in that** the locking element (21) is in the form of a frame, with a lower frame face (21a) which faces the first latching element (14) resting on the latter when in the locked position on the side of the first latching element (14) facing away from the latch, the locking element (21) preferably having an upper frame side (21b), which faces away from the first latching element (14) and, in the locked position, grips behind the lever arm (16) of the first latching element (14, 16) at the operating end (18) facing away from the latter, blocking it.

9. Apparatus according to one of Claims 1 to 8, **characterized**
**in that** the battery housing (3) has a housing lower part (20b) and a housing upper part (20a) on which in each case one of the first latching elements (14, 16) is held on opposite housing faces (12, 13).

10. Apparatus according to one of Claims 1 to 9, **characterized**
**in that** the battery housing (3) is composed of plastic, with the first latching hooks (14, 16) being integrally connected to the battery housing (3).

11. Apparatus according to one of Claims 1 to 10, **characterized**
**in that** the appliance chassis (2) is composed of metal sheet at least in the area of a holding frame (4) for the battery housing (3).

## Revendications

1. Dispositif (1) pour une alimentation électrique, notamment une alimentation électrique de secours dans un aéronef, comprenant un châssis d'appareil (2) et un boîtier de batterie (3) pouvant être monté dessus, pour recevoir une pluralité de batteries ou d'accumulateurs (A), des premiers éléments d'encliquetage (14, 16) étant prévus latéralement sur le boîtier de batterie (3), lesquels coopèrent de manière détachable à la manière d'une connexion par encliquetage avec des deuxièmes éléments d'encliquetage (15) correspondants prévus sur le châssis d'appareil (2),
**caractérisé par**
un élément de verrouillage (21) associé au premier élément d'encliquetage respectif (14, 16) qui est guidé de manière déplaçable entre une position de verrouillage bloquant l'élément d'encliquetage respectif (14, 16) et une position de déverrouillage libérant l'élément d'encliquetage correspondant (14, 16) en vue du démontage du boîtier de batterie (3).

2. Dispositif selon la revendication 1,
**caractérisé en ce que**
l'on prévoit dans le châssis d'appareil (2) au moins une rainure de réception (10, 11) pour établir une connexion par engagement par correspondance géométrique au boîtier de batterie (3),
la connexion par engagement par correspondance géométrique étant active de préférence dans deux directions de contrainte (X, Y) perpendiculaires l'une à l'autre,
et la rainure de réception (10, 11) étant prévue de préférence dans la région d'un socle de contact (6) de type dôme du châssis d'appareil (2) en vue de son contact avec le boîtier de batterie (3).

3. Dispositif selon la revendication 1 ou 2, **caractérisé en ce que**
les premiers éléments d'encliquetage (14) sont façonnés à une extrémité libre tournée vers le châssis d'appareil (2) dans l'état de montage d'un bras de levier (16) maintenu de manière pivotante sur le boîtier de batterie (3),
le bras de levier (16) étant de préférence maintenu de manière élastique à ressort sur le boîtier de batterie (3), et
le bras de levier (16) étant de préférence maintenu de manière pivotante par le biais d'une nervure de fixation (17) agissant comme un ressort de torsion sur le boîtier de batterie (3).

4. Dispositif selon la revendication 3,
**caractérisé en ce que**
le bras de levier (16) est façonné par le biais de la nervure de fixation (17) sur le boîtier de batterie (3).

5. Dispositif selon l'une quelconque des revendications 1 à 4,
**caractérisé en ce que**
les premiers éléments d'encliquetage (14) sont réalisés sous forme de crochets d'encliquetage et les deuxième éléments d'encliquetage (15) sont réalisés sous forme d'oeillets d'encliquetage formant des contre-dépouilles pour les premiers éléments d'encliquetage (14),
les deuxième éléments d'encliquetage (15) étant réalisés de préférence sous forme de pattes qui sont formées dans un fond de cadre (5) du châssis d'appareil (2) et qui sont coudées dans l'état de montage du boîtier de batterie (3) dans la direction de ce dernier.

6. Dispositif selon l'une quelconque des revendications 1 à 5,
**caractérisé en ce que**
les premiers éléments d'encliquetage (14, 16) sont verrouillés dans l'état de montage du boîtier de batterie (3).

7. Dispositif selon l'une quelconque des revendications 1 à 6,
**caractérisé en ce que**
l'élément de verrouillage (21) est maintenu de manière déplaçable par coulissement sur le boîtier de batterie (3) transversalement à la direction d'encliquetage (F_{R}, 19) du premier élément d'encliquetage respectif (14, 16).

8. Dispositif selon la revendication 5 ou 7, **caractérisé en ce que**
l'élément de verrouillage (21) est réalisé sous forme de cadre, un côté de cadre inférieur (21a) tourné vers le premier élément d'encliquetage (14) s'appliquant dans la position de verrouillage contre le côté du premier élément d'encliquetage (14) opposé à l'encliquetage,
et de préférence, il est prévu que l'élément de verrouillage (21) vienne en prise par l'arrière avec blocage par un côté de cadre supérieur (21b) opposé au premier élément d'encliquetage (14) dans la position de verrouillage, avec le bras de levier (16) du premier élément d'encliquetage (14, 16) sur l'extrémité d'actionnement (18) opposée à celui-ci.

9. Dispositif selon l'une quelconque des revendications 1 à 8,
**caractérisé en ce que**
le boîtier de batterie (3) présente une partie inférieure de boîtier (20b) et une partie supérieure de boîtier (20a), sur laquelle est maintenu à chaque fois l'un des premiers éléments d'encliquetage (14, 16) sur des côtés opposés du boîtier (12, 13).

10. Dispositif selon l'une quelconque des revendications 1 à 9,
**caractérisé en ce que**
le boîtier de batterie (3) se compose de plastique, les premiers crochets d'encliquetage (14, 16) étant connectés d'une seule pièce au boîtier de batterie (3).

11. Dispositif selon l'une quelconque des revendications 1 à 10,
**caractérisé en ce que**
le châssis d'appareil (2) se compose d'une tôle métallique au moins dans la région d'un cadre de réception (4) pour le boîtier de batterie (3).
